# DEMANDE DE BREVET EUROPEEN

(11) **EP 0 673 800 A1**
(43) Date de publication de la demande: **27.09.1995**
(21) Numéro de dépôt: 95400588.0
(22) Date de dépôt: 17.03.1995
(51) Int. Cl.: B60N 2/36

(54) **Siège arrière de véhicule automobile**

(30) Priorité: 22.03.1994 FR 9403317
(71) Demandeur: Société Anonyme dite: REGIE NATIONALE DES USINES RENAULT, F-92109 Boulogne Billancourt (FR)
(72) Inventeur: Llorente, Louis, F-78200 Mantes la Ville (FR); Girard, Philippe, F-95240 Cormeilles en Parisis (FR)
(74) Mandataire: Ernst-Schonberg, Michel

(57) **Abrégé**

Siège arrière de véhicule automobile du type comportant un élément de dossier (10) dont la face arrière constitue la cloison d'un compartiment à bagages (3) et dans lequel ledit élément est verrouillé d'une part à proximité de son extrémité supérieure au contact d'une paroi (14) localisée dans le compartiment à bagages (3) du véhicule et est verrouillé d'autre part à proximité de son extrémité inférieure sur un pivot d'articulation (30) au contact d'une paroi adjacente, et dans lequel ledit élément possède un tube transversal d'armature (25) du dossier monté dans un palier intermédiaire (33) porté par le plancher du véhicule, caractérisé par le fait que le palier intermédiaire porte un moyen de retenue (37) et un moyen limiteur de basculement (40) respectivement au contact avec le dit élément d'armature (25) et avec une butée (43) portée par la face arrière de l'élément de dossier (10).

## Description

L'invention concerne un siège arrière de véhicule automobile du type comportant deux éléments de dossier dont les faces arrières respectives constituent la cloison d'un compartiment à bagages. L'invention concerne plus particulièrement un tel siège dans lequel chaque élément de dossier est verrouillé à proximité de son extrémité supérieure au contact d'une paroi localisée dans le compartiment à bagages du véhicule et dans lequel chaque élément de dossier est verrouillé au niveau de son extrémité inférieure au contact d'un pivot d'articulation monté dans un palier porté par une paroi adjacente de l'habitacle.

L'usage multiple des véhicules a abouti à la réalisation de sièges arrières qui permettent, par rabattement du dossier et par basculement vers l'avant de l'assise ou de l'ensemble du siège, de créer un volume de chargement augmenté.

On a toutefois constaté que les heurts des charges transportées, consécutifs aux décélérations brutales du véhicule endommageaient la base du dossier et exerçaient une contrainte de flexion sur l'axe d'articulation de l'extrémité inférieure dudit dossier.

Par ailleurs, on a également constaté que les efforts d'inertie, exercés par les occupants du siège, au cours d'un choc arrière subi par le véhicule, endommageaient également la base du dossier en exerçant une contrainte de flexion sur l'axe d'articulation de l'extrémité inférieure du dit dossier.

Pour remédier à cet inconvénient la publication FR-A-2500399 décrit un pivot de dossier sous la forme d'un élément tubulaire transversal qui s'étend sur toute la largeur de la carrosserie et qui est maintenu dans un palier intermédiaire et immobilisé au contact des parois latérales adjacentes de l'habitacle.

L'invention a pour objet une simplification du processus de montage du siège dans le véhicule et un palier de retenue de la partie inférieure de l'armature dudit siège dans le but de l'immobiliser et de lui conférer une rigidité et une résistance satisfaisante aux efforts de contrainte exercés sur la base du dossier.

Selon l'invention ces conditions sont satisfaites en ce que le palier intermédiaire porte un moyen de retenue et un moyen limiteur de basculement respectivement au contact avec un élément transversal de renforcement de l'armature du dossier et avec une butée portée par la face arrière de l'élément de dossier.

Selon une autre caractéristique, les moyens de retenue et limiteur de basculement sont localisés sur les flancs du palier intermédiaire et délimitent une encoche de montage de l'élément tubulaire de l'armature du dossier.

Le siège ainsi réalisé possède l'avantage de pouvoir être monté dans le véhicule avec son palier intermédiaire préassemblé qui occupe une position angulaire d'attente par rapport à l'élément d'armature, dans le but de faciliter l'opération de vissage du palier sur le plancher du véhicule.

D'autres caractéristiques et avantages de l'invention apparaîtront à la lecture de la description d'un mode de réalisation du siège en référence au dessin annexé dans lequel :
- la figure 1 est une représentation schématique fonctionnelle du siège en position d'utilisation,
- la figure 2 est une vue de dessus du siège représenté à la figure 1,
- la figure 3 est une vue de face d'un élément de dossier et une représentation partielle de l'extrémité inférieure de l'armature dudit élément verrouillé au contact d'un pivot d'articulation porté par le véhicule,
- la figure 4 est une vue latérale de l'extrémité inférieure de l'armature représentée à la figure 3,
- la figure 5 est une vue latérale de l'extrémité inférieure de l'armature de l'élément de dossier dans le plan du palier intermédiaire,
- la figure 6 est une représentation perspective du palier intermédiaire.

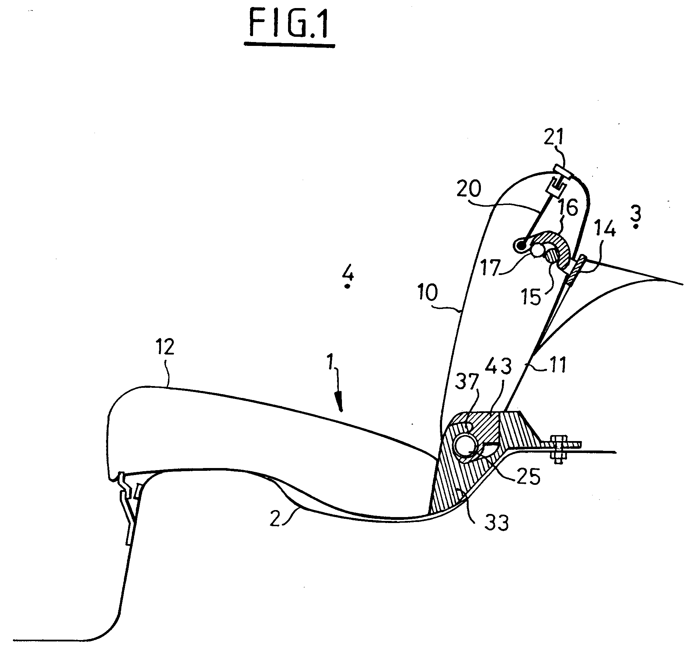

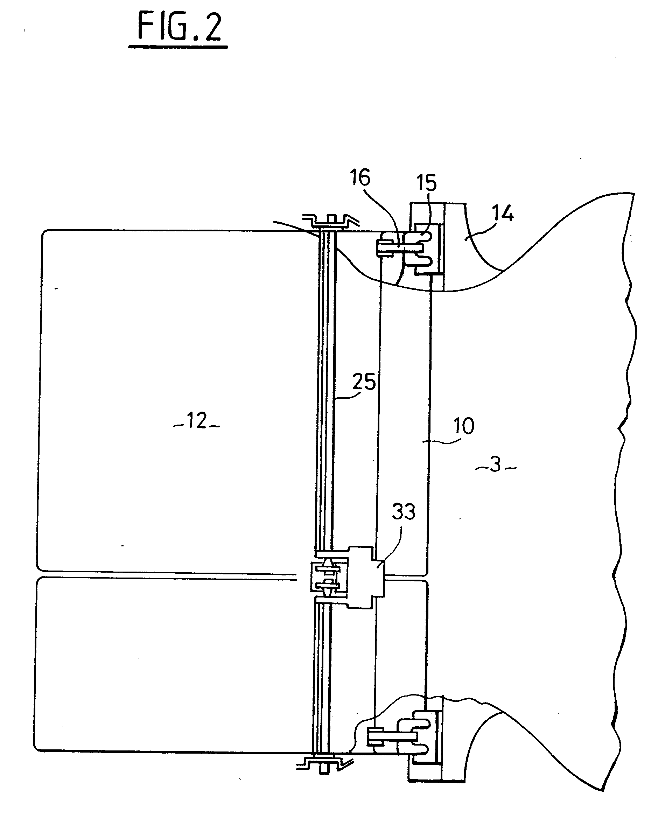

Les figures 1 et 2 représentent schématiquement un siège arrière 1 de véhicule automobile monté sur un plancher 2. Derrière le siège 1 se trouve le compartiment à bagages 3 qui communique avec l'habitacle 4. A cet effet la face arrière 11 de l'élément de dossier 10 du siège constitue la cloison du compartiment à bagages.

Le siège 1 possède au moins un élément de dossier 10 et un élément d'assise 12.

On désignera dans ce qui suit lesdits éléments 10, 12 par les termes génériques "dossier" et "assise" étant entendu que l'assise et le dossier peuvent être divisés transversalement dans le but de favoriser le rangement ou le démontage partiel du siège ainsi que cela est bien connu.

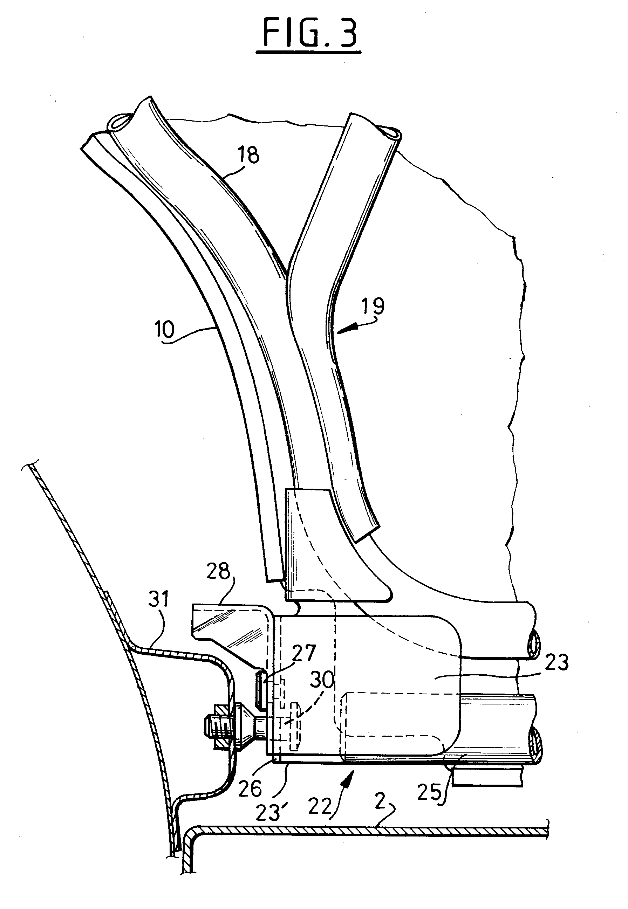

Le dossier 10 est verrouillé à proximité de son extrémité supérieure 101 au contact d'une paroi de renforcement 14 localisée dans le compartiment à bagages 3. La paroi 14 porte à cet effet une gâche 15 de réception d'un verrou basculant 16 articulé autour d'un axe 17 porté par une platine fixée au montant 18 de l'armature 19 du dossier représentés à la figure 3. Le verrou 16 est attelé à une tringle de commande 20 manoeuvrée par un bouton de commande de déverrouillage 21 localisé au sommet du dossier 10.

Ainsi que cela est représenté à la figure 3 l'extrémité inférieure du dossier 10 est munie d'un palier latéral 22 en tôle pliée rigidement fixé au montant 18 de l'armature. Le palier 22 en tôle pliée possède une section générale en U, dont les branches 23, 23' encadrent un tube transversal 25 de l'armature 19 et parmi lesquelles la branche 23 est soudée audit tube 25.

Les branches 23, 23' sont réunies par la paroi de fond 26 sur laquelle est rapporté l'axe de rotation 27 d'un crochet 28 de verrouillage manuel. La paroi 26 porte par ailleurs une encoche 29 de réception du pivot d'articulation 30 porté par la paroi latérale 31 de l'habitacle et localisée au niveau du passage des roues arrière du véhicule.

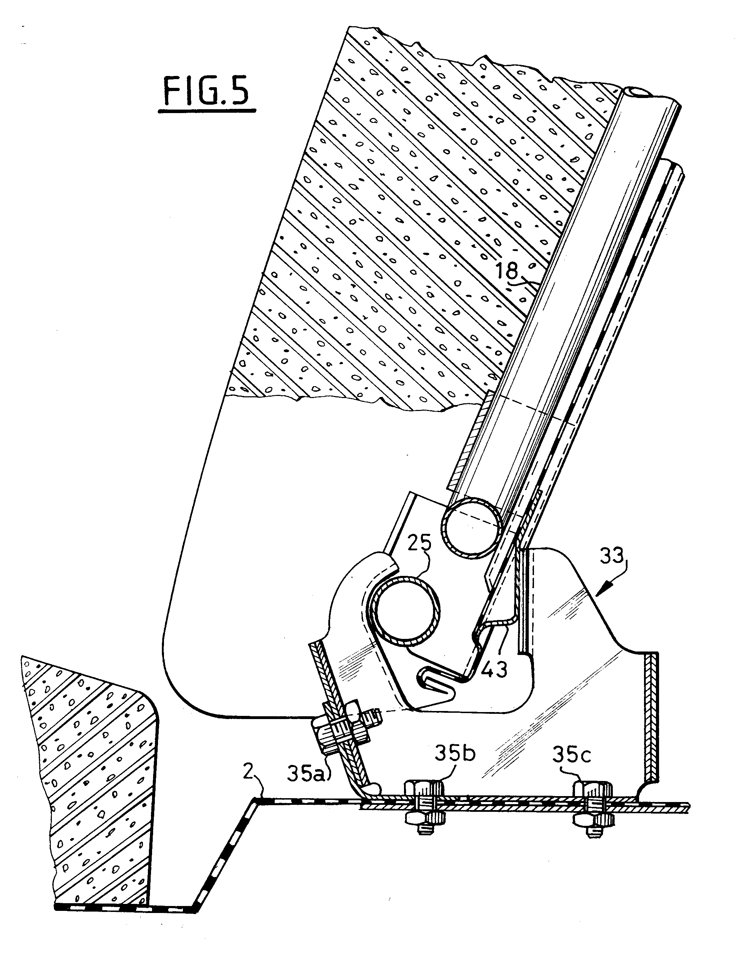

Comme représenté à la figure 5, le tube transversal 25 de l'armature est supporté par un palier intermédiaire 33 rigidement fixé au plancher 2 au moyen de vis 35a, 35b, 35c.

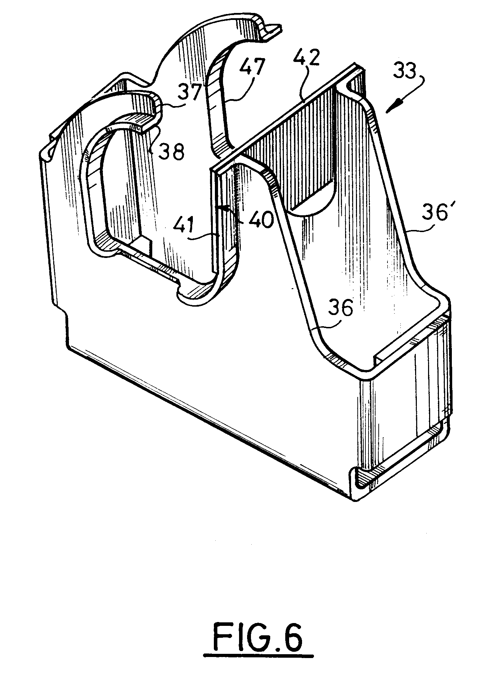

Ainsi que cela est montré à la figure 6, le palier 33 est essentiellement formé par deux flancs 36, 36' assemblés par soudure et respectivement élaborés dans une tôle découpée et pliée qui délimitent une encoche d'encastrement 47 du tube 25.

On décrira de ce fait le seul flasque 36 représenté à la figure perspective 6. Le flasque 36 possède plus particulièrement deux cornes bordant l'encoche 47 de réception du tube 25 qui constituent respectivement un crochet de retenue 37 et une butée 40 de limitation du basculement du dossier 10 vers l'arrière.

Le crochet de retenue 37 s'étend transversalement par un bord d'appui 38 du tube transversal 25.

La butée 40 est constituée par un bord d'appui 41 portant une plaque d'amortissement 42 soudée au bord d'appui 41 du tube transversal 25 et au contact des flancs de l'encoche 47. Dans le but d'éviter le basculement du dossier 10 vers l'arrière, la paroi arrière de celui-ci porte un bossage de butée 43 au contact de la plaque 42.

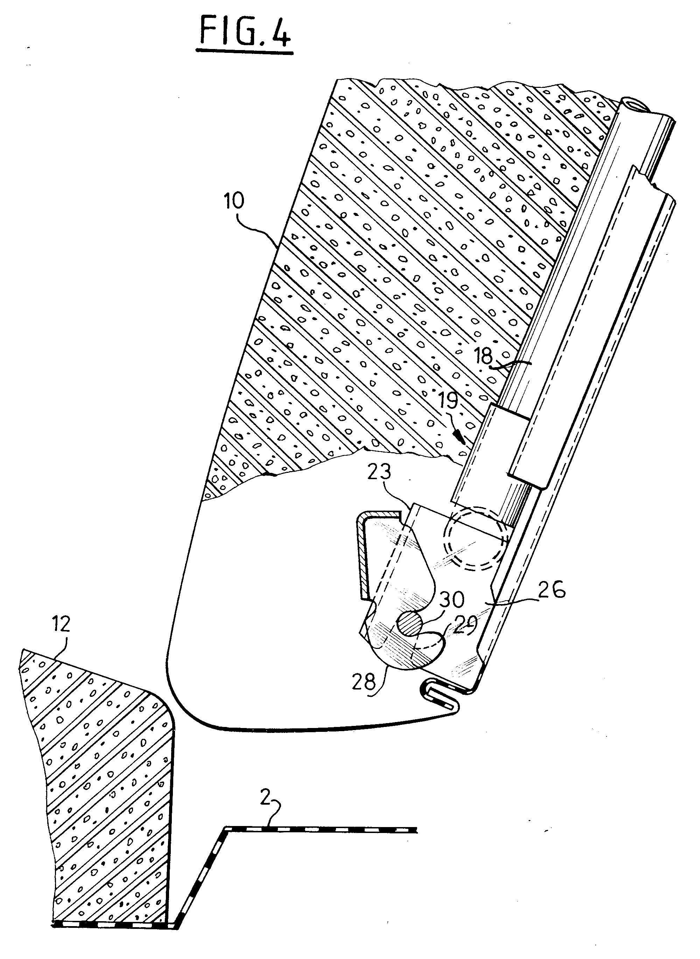

Le dossier 10 chevauchant le pivot 30 est monté dans le véhicule soit conjointement avec le palier 33, soit séparément. A cet effet il est possible de basculer légèrement vers la gauche de la figure 4 le dossier 10 pour permettre de réaliser préalablement la liaison rigide du palier 33 avec le plancher 2. On ramène ensuite le dossier 10 au contact de la butée 40 en verrouillant le haut du dossier au contact de la gâche 15.

## Revendications

**1)** Siège arrière de véhicule automobile du type comportant un élément de dossier (10) dont la face arrière constitue la cloison d'un compartiment à bagages (3) et dans lequel ledit élément est verrouillé d'une part à proximité de son extrémité supérieure au contact d'une paroi (14) localisée dans le compartiment à bagages (3) du véhicule et est verrouillé d'autre part à l'extrémité de son extrémité inférieure sur un pivot d'articulation (30) au contact d'une paroi adjacente, et dans lequel ledit élément possède un tube transversal d'armature (25) du dossier monté dans un palier intermédiaire (33) porté par le plancher du véhicule, caractérisé par le fait que le palier intermédiaire porte un moyen de retenue (37) et un moyen limiteur de basculement (40) respectivement au contact avec le dit élément d'armature (25) et avec une butée (43) portée par la face arrière de l'élément de dossier (10).

**2)** Siège selon la revendication 1, caractérisé par le fait que les moyens de retenue (37) et limiteur de basculement (40) sont localisés au contact des flancs (36, 36') du palier (33) qui délimite une encoche de montage (47) de l'élément (25) de l'armature du dossier.
